# EUROPEAN PATENT SPECIFICATION

(11) **EP 3 363 967 B1**
(45) Date of publication and mention of the grant of the patent: **30.10.2019**
(21) Application number: 17156403.2
(22) Date of filing: 16.02.2017
(51) Int. Cl.: E04H 5/04, H02B 7/06, H02B 1/56, H02B 1/52

(54) **POWER CONVERSION ASSEMBLY AND METHOD FOR INSTALLING OF SUCH AN ASSEMBLY**
STROMUMWANDLUNGSANORDNUNG UND METHODE ZUR INSTALLATION EINER SOLCHEN ANORDNUNG
ENSEMBLE DE CONVERSION DE PUISSANCE ET METHODE D'INSTALLATION D'UN TEL ENSEMBLE

(43) Date of publication of application: 22.08.2018
(73) Proprietor: ABB Schweiz AG, 5400 Baden (CH)
(72) Inventor: Palonen, Juha, 00380 Helsinki (FI)
(74) Representative: Kolster Oy Ab

(56) References cited:
- EP-A1- 1 279 621
- EP-A2- 1 962 396
- WO-A1-2016/124873
- CN-A- 105 958 355
- FR-A1- 2 841 693

## Description

### FIELD OF THE INVENTION

The present invention relates to a power conversion assembly comprising a transformer accommodated in a housing, and to a method for installing the power conversion assembly.

Safety distance is required between an energized terminal of a transformer and an inner surface of a housing accommodating the transformer. The higher the voltage of the transformer, the greater the required safety distance. For example, in Europe a required safety distance is 320mm when a voltage of a terminal is 30kV.

When a power conversion assembly is constructed at a final location of the power conversion assembly, there is no problem leaving a required safety distance between terminals of the transformer and ceiling of the housing. However, if a power conversion assembly is manufactured at a location far away from a final location of the power conversion assembly, a safety distance between terminals of the transformer and ceiling of the housing increases dimensions of the housing and therefore raises costs of transporting the power conversion assembly to the final location thereof. EP1962396 discloses a power conversion assembly according to the state of the art.

### BRIEF DESCRIPTION OF THE INVENTION

An object of the present invention is to provide a power conversion assembly which requires less space during transport than a known power conversion assembly. Another object of the present invention is to provide a method for installing the power conversion assembly according to the invention. The objects of the invention are achieved by a power conversion assembly and method which are characterized by what is stated in the independent claims. The preferred embodiments of the invention are disclosed in the dependent claims.

The invention is based on the idea of providing a housing of a power conversion assembly with an extension element which is adapted to be bolted to a lower position and an upper position, the extension element comprising a portion of the roof of the housing, and being located over high voltage terminal(s) of the transformer such that moving the extension element from the lower position to the upper position increases clearance between the high voltage terminal(s) and inner surface of the extension element. The lower position of the extension element is for transport of the power conversion assembly, and the upper position of the extension element is for use of the power conversion assembly.

An advantage of the power conversion assembly of the invention is that the power conversion assembly requires less space during transport to the final location than a known power conversion assembly with a fixed roof. Therefore the invention enables transporting as a standard sized sea-container a power conversion assembly with a larger transformer than before. According to the method of the invention the extension element of the housing is raised to the upper position with the same crane that is used for hoisting the power conversion assembly to its final location, wherein providing the required safety distance above the transformer is a swift and simple operation.

### BRIEF DESCRIPTION OF THE DRAWINGS

In the following the invention will be described in greater detail by means of preferred embodiments with reference to the attached drawings, in which:
Figure 1 shows a power conversion assembly according to an embodiment of the invention from a first side direction, an extension element being in its lower position;
Figure 2 shows the power conversion assembly of Figure 1 with the extension element in its upper position;
Figure 3 shows the power conversion assembly of Figure 1 from a second side direction, the extension element being in its upper position;
Figure 4 shows the extension element in its lower position;
Figure 5 shows the extension element in its upper position;
Figure 6 shows the power conversion assembly of Figure 2 without a side wall panel; and
Figure 7 illustrates hoisting the extension element to its upper position with a crane.

### DETAILED DESCRIPTION OF THE INVENTION

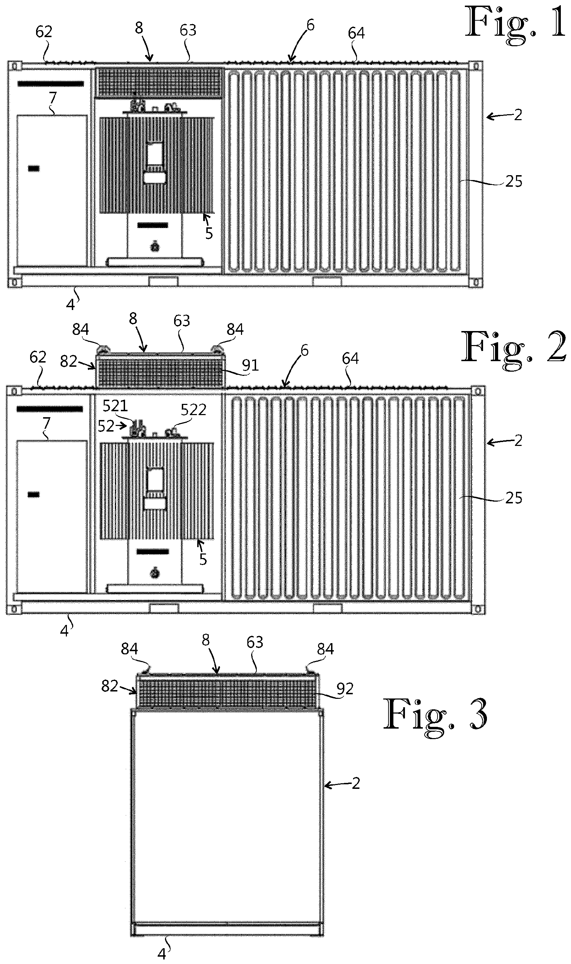

Figure 1 is a side-view of a power conversion assembly comprising a housing 2 and a power conversion system accommodated in the housing 2. Figure 1 shows the power conversion assembly from a first side direction. The housing 2 comprises a frame 4, a roof 6 and a ventilating grate system for cooling interior of the housing 2. The power conversion system comprises a transformer 5 adapted to increase alternating voltage, the transformer 5 has a terminal system 52 connecting the transformer 5 to other components of the power conversion system. The terminal system 52 of the transformer 5 is located in an upper part of the transformer 5, the upper part of the transformer 5 being located closer to the roof 6 of the housing 2 than a lower part of the transformer 5. The transformer 5 is a three-phase transformer comprising three high voltage terminals 522 and three low voltage terminals 521.

Nominal voltage at the high voltage terminals 522 is 36kV. In an alternative embodiment a high voltage side of the transformer has a nominal voltage higher than or equal to 5000V.

The housing 2 comprises an extension element 8 which is adapted to be fastened to the frame 4 in a lower position with a plurality of bolt joints, and in an upper position with a plurality of bolt joints. In Figure 1 the extension element 8 is in the lower position, and in Figure 2 the extension element 8 is in the upper position. Due to the plurality of bolt joints, the extension element 8 braces the housing 2 in both positions thereof.

The roof 6 comprises a first fixed roof portion 62 and a second fixed roof portion 64 fixedly fastened to the frame 4, and an extension roof portion 63 attached to the extension element 8. The lower position and the upper position of the extension element 8 are spaced apart in a height direction of the housing 2 such that in the lower position of the extension element 8 the extension roof portion 63 forms a substantially uniform roof surface with the first fixed roof portion 62 and the second fixed roof portion 64, the substantially uniform roof surface is a substantially planar roof surface. In an embodiment distance between the lower position and the upper position is equal to or greater than 15cm. A plane defined by the substantially uniform roof surface is perpendicular to the height direction of the housing 2.

The extension roof portion 63 is located over the high voltage terminals 522 of the transformer 5 such that moving the extension element 8 from the lower position to the upper position increases clearance between the high voltage terminals 522 and an inner surface of the extension element 8. The extension element 8 must be in the upper position when the transformer 5 is energized, because in the lower position of the extension element 8 a distance between the high voltage terminals 522 and the inner surface of the extension element 8 is less than the required safety distance.

The roof 6 is adapted to protect the power conversion system from rain. The roof 6 is made of metal. In an alternative embodiment the roof is made of some other material such as wood or plastic.

The extension roof portion 63 has a shape of a rectangle when viewed from a direction parallel to the height direction of the housing 2. Figure 2 shows that the extension roof portion 63 is located between the first fixed roof portion 62 and the second fixed roof portion 64 in a length direction of the housing 2. In an alternative embodiment the roof comprises only one fixed roof portion, and the extension roof portion is located at one end of the housing in the length direction.

Figure 3 shows the power conversion assembly of Figure 1 from a second side direction, the second side direction being parallel to a length direction of the housing 2. The second side direction is perpendicular to the first side direction. In Figure 3 the extension element 8 is in its upper position. Figure 3 shows that a width of the extension roof portion 63 is substantially equal to a total width of the housing 2. The width direction is perpendicular to both the height direction and the length direction of the housing 2. The length direction of the housing 2 is larger than the width direction of the housing 2. In Figures 1 to 3 the height direction is the vertical direction.

When the extension element 8 is in the lower position shown in Figure 1, the housing 2 has dimensions of a standard sized sea-container. In an embodiment the housing of a power conversion assembly is built from a real sea-container.

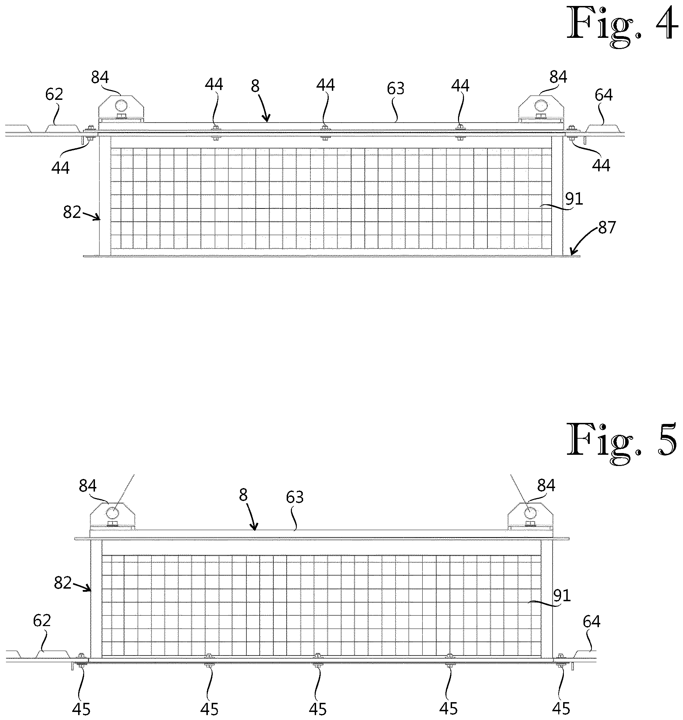

Figure 4 shows the extension element 8 in its lower position. Figure 4 shows that the extension element 8 comprises a support structure 82 having a plurality of first bolt apertures at an upper portion thereof, the plurality of first bolt apertures being adapted to receive bolts of the plurality of bolt joints 44 in the lower position of the extension element 8. The bolts of the plurality of bolt joints 44 extend vertically. The extension roof portion 63 is fixedly fastened to the support structure 82.

Figure 5 shows the extension element 8 in its upper position. Figure 5 shows that the support structure 82 has a plurality of second bolt apertures at a lower portion thereof, the plurality of second bolt apertures being adapted to receive bolts of the plurality of bolt joints 45 in the upper position of the extension element 8.

The frame 4 comprises a plurality of counterpart bolt apertures. The plurality of counterpart bolt apertures is adapted to receive bolts of the plurality of bolt joints both in the lower position of the extension element 8 and the upper position of the extension element 8. In other words, the bolts of the plurality of bolt joints extend through same counterpart bolt apertures both in Figure 4 and Figure 5. The plurality of second bolt apertures is provided in a flange 87 of the support structure 82 which is adapted to contact a counterpart bolt aperture portion of the frame 4 from below in the upper position of the extension element 8. The counterpart bolt aperture portion of the frame 4 is a portion of the frame 4 in which the plurality of counterpart bolt apertures is provided.

In an alternative embodiment same bolt apertures of the extension element are used both in the lower position of the extension element and in the upper position of the extension element. In a further alternative embodiment both the extension element and the frame comprise separate bolt apertures for the lower position of the extension element and the upper position of the extension element.

The ventilating grate system of the housing 2 includes four extension element ventilating grates provided in the extension element 8 and adapted to allow, in the upper position of the extension element 8, an extension element cooling air flow between ambient air and interior of the housing 2 while preventing harmful foreign objects from passing through the extension element ventilating grates. The harmful foreign objects include for example birds.

When the extension element 8 is in the upper position, the four extension element ventilating grates form a flow path for air through the extension element 8 in a direction perpendicular to the height direction of the housing 2. Each of the extension element ventilating grates is a substantially planar element having a form of a rectangle. Each of the extension element ventilating grates defines a plane whose normal is perpendicular to the height direction of the housing. When viewed from a direction parallel to the height direction of the housing 2, the four extension element ventilating grates form substantially a rectangle.

Figure 2 shows a first extension element ventilating grate 91. The first extension element ventilating grate 91 defines a plane whose normal is perpendicular to the image plane of Figure 2. Figure 3 shows a second extension element ventilating grate 92. The second extension element ventilating grate 92 defines a plane whose normal is perpendicular to the image plane of Figure 3. The other two extension element ventilating grates are not shown in the Figures.

The extension element 8 comprises a hoist bracket system for hoisting the extension element 8 from the lower position to the upper position with a crane. The hoist bracket system comprises four movable hoist brackets 84, each of which is movable between a use position and a rest position, the use position being adapted for connection between a hoisting member of a crane and the movable hoist bracket 84, and the rest position being a position in which the movable hoist bracket projects less upwards from the extension element 8 than in the use position. Each movable hoist bracket 84 comprises an opening for connection between a hoisting member of a crane and the movable hoist bracket 84. A crane can be operationally connected to the movable hoist brackets 84 with lifting belts, ropes, chains or hooks, or with combination thereof.

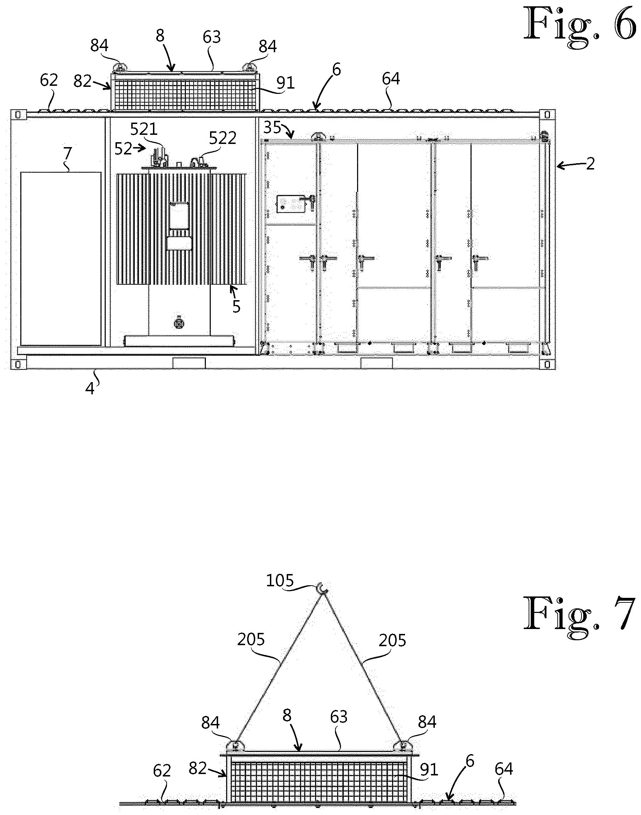

Figure 7 illustrates hoisting the extension element 8 to its upper position with a crane. In Figure 7 a hoisting member 105 of a crane is connected to the movable hoist brackets 84 with lifting belts 205.

In Figure 1 the movable hoist brackets 84 are in the rest position. Figure 1 shows that in the rest position the movable hoist brackets 84 do not project from an upper surface of the extension roof portion 63. In Figures 2 and 3 the movable hoist brackets 84 are in the use position. In the use position the movable hoist brackets 84 project from the upper surface of the extension roof portion 63.

In an alternative embodiment a hoist bracket system comprises at least one hoist bracket hole provided in the extension element, the at least one hoist bracket hole is a threaded hole adapted to receive a threaded portion of a separate hoist bracket. A separate hoist bracket is connected to a hoist bracket hole when necessary. During transport and normal use of the power conversion assembly there are no separate hoist brackets connected to the extension element.

In addition to the transformer 5, the power conversion system comprises an inverter 35 and switchgear 7. Figure 6 shows the power conversion assembly of Figure 2 without a side wall panel 25 present in Figures 1 and 2. In Figure 6 the inverter 35 is on the right side of the transformer 5. The inverter 35 is adapted to be connected to a solar power station and to invert direct current supplied by the solar power station. The switchgear 7 is adapted to electrically connect the power conversion system to a load such as distribution network. The transformer 5 is adapted to electrically connect the inverter 35 and the switchgear 7. The transformer 5 is electrically conductively connected to the inverter 35 through the low voltage terminals 521, and to the switchgear 7 through the high voltage terminals 522. The transformer 5 is located between the inverter 35 and the switchgear 7.

In the embodiment shown in Figure 1, the power conversion system is adapted to convert a low voltage direct current supplied by a solar power station into high voltage alternating current. In an alternative embodiment the power conversion system does not comprise an inverter but is simply adapted to convert electricity from one form to another by increasing alternating voltage by means of a transformer.

The housing 2 comprises two side wall openings, the side wall openings being provided on opposite side walls of the housing 2. Each side wall of the housing 2 extends perpendicular to the roof 6. The side wall openings are aligned with each other such that they provide a flow path for cooling air through the housing 2 in a direction parallel to the width direction. The side wall openings are located next to the transformer 5 such that air flowing through the housing 2 via the side wall openings cools the transformer 5.

The side wall openings have identical shape and size. In height direction the side wall openings extend substantially from floor to ceiling of the housing 2. In the length direction of the housing 2 dimensions of the side wall openings exceed dimension of the transformer 5. In alternative embodiments side wall openings have different shapes and/or sizes.

In Figures 1 and 2 the side wall openings are uncovered in order to provide an unobstructed view to interior of the housing 2. Each side wall opening is adapted to be covered with a corresponding protective element during transport of the power conversion assembly. In an embodiment the protective element is made of the same material as side walls of the housing. The protective elements are adapted to protect the power conversion system from damages during the transport.

Each side wall opening is adapted to be covered with a corresponding ventilating door during use of the power conversion assembly. Each ventilating door is a hinged door provided with a corresponding side wall ventilating grate. Each side wall ventilating grate is adapted to cover the corresponding side wall opening and to allow side wall cooling air flow between ambient air and interior of the housing 2 while preventing harmful foreign objects from passing through the side wall ventilating grate.

It will be obvious to a person skilled in the art that the inventive concept can be implemented in various ways. The invention and its embodiments are not limited to the examples described above but may vary within the scope of the claims.

## Claims

1. A power conversion assembly comprising:
a housing (2) comprising a frame (4) and a roof (6), the roof (6) comprises a fixed roof portion (62, 64) which is fixedly fastened to the frame (4);
a power conversion system accommodated in the housing (2), the power conversion system comprising a transformer (5) adapted to increase alternating voltage, the transformer (5) has a terminal system (52) for connecting the transformer (5) to other components of the power conversion assembly, the terminal system (52) comprising at least one high voltage terminal (522) located in an upper part of the transformer (5), the upper part of the transformer (5) being located closer to the roof (6) of the housing (2) than an lower part of the transformer (5),
wherein the housing (2) comprises an extension element (8), and the roof (6) comprises an extension roof portion (63) attached to the extension element (8), **characterized in that** the extension element (8) is adapted to be fastened to the frame (4) in a lower position with a plurality of bolt joints (44), and in an upper position with a plurality of bolt joints (45), the lower position and the upper position being spaced apart in a height direction of the housing (2) such that in the lower position of the extension element (8) the extension roof portion (63) forms a substantially uniform roof surface with the fixed roof portion (62, 64).

2. A power conversion assembly according to claim 1, **characterized in that** the substantially uniform roof surface is a substantially planar roof surface.

3. A power conversion assembly according to claim 2, **characterized in that** the extension roof portion (63) has a shape of a rectangle when viewed from a direction parallel to the height direction of the housing (2).

4. A power conversion assembly according to any one of the preceding claims, **characterized in that** the extension element (8) comprises a support structure (82) having a plurality of first bolt apertures at an upper portion of the support structure (82), and a plurality of second bolt apertures at a lower portion of the support structure (82), the plurality of first bolt apertures are adapted to receive bolts of the plurality of bolt joints (44) in the lower position of the extension element (8), and the plurality of second bolt apertures are adapted to receive bolts of the plurality of bolt joints (45) in the upper position of the extension element (8).

5. A power conversion assembly according to any one of the preceding claims, **characterized in that** the housing (2) comprises a ventilating grate system for cooling interior of the housing (2), the ventilating grate system including at least one extension element ventilating grate (91, 92) provided in the extension element (8) and adapted to allow, in the upper position of the extension element (8), an extension element cooling air flow between ambient air and interior of the housing (2) while preventing harmful foreign objects from passing through the at least one extension element ventilating grate (91, 92).

6. A power conversion assembly according to any one of the preceding claims, **characterized in that** the extension element (8) comprises a hoist bracket system for hoisting the extension element (8) from the lower position to the upper position with a crane.

7. A power conversion assembly according to claim 6, **characterized in that** the hoist bracket system comprises at least one movable hoist bracket (84) which is movable between a use position and a rest position, the use position being adapted for connection between a hoisting member (105) of a crane and the movable hoist bracket (84), and the rest position being a position in which the movable hoist bracket (84) projects less upwards from the extension element (8) than in the use position.

8. A power conversion assembly according to any one of claims 5 to 7, **characterized in that** the housing (2) comprises at least one side wall opening, the at least one side wall opening is provided on a side wall of the housing (2), and located next to the transformer (5) in order to enhance cooling of the transformer (5).

9. A power conversion assembly according to any one of the preceding claims, **characterized in that** at a high voltage side of the transformer (5) nominal voltage is higher than or equal to 5000V, the high voltage side of the transformer (5) comprising the at least one high voltage terminal (522).

10. A power conversion assembly according to any one of the preceding claims, **characterized in that** when the extension element (8) is in the lower position, the housing (2) has dimensions of a standard sized sea-container.

11. A method for installing a power conversion assembly according to any one of claims 1 to 10, the method comprising:
transporting the power conversion assembly near a final location thereof;
hoisting the power conversion assembly to the final location with a crane;
hoisting the extension element (8) from the lower position to the upper position with the crane; and
fastening the extension element (8) to the frame (4) in the upper position with a plurality of bolt joints (45) while the crane is holding the extension element (8) in the upper position.

## Patentansprüche

1. Stromumwandlungsanordnung, die umfasst:
ein Gehäuse (2), das einen Rahmen (4) und ein Dach (6) umfasst, wobei das Dach (6) einen festen Dachabschnitt (62, 64) umfasst, der fest an dem Rahmen (4) befestigt ist;
ein Stromumwandlungssystem, das in dem Gehäuse (2) untergebracht ist, wobei das Stromumwandlungssystem einen Transformator (5) umfasst, der angepasst ist, um Wechselspannung zu erhöhen, wobei der Transformator (5) ein Anschlusssystem (52) zum Verbinden des Transformators (5) mit anderen Bauteilen der Stromumwandlungsanordnung aufweist, wobei das Anschlusssystem (52) mindestens einen Hochspannungsanschluss (522) umfasst, der sich in einem oberen Teil des Transformators (5) befindet, wobei der obere Teil des Transformators (5) sich näher an dem Dach (6) des Gehäuses (2) befindet als ein unterer Teil des Transformators (5),
wobei das Gehäuse (2) ein Erweiterungselement (8) umfasst und das Dach (6) einen Erweiterungsdachabschnitt (63) umfasst, der an dem Erweiterungselement (8) angebracht ist, **dadurch gekennzeichnet, dass** das Erweiterungselement (8) angepasst ist, um an dem Rahmen (4) in einer unteren Position mit mehreren Schraubenverbindungen (44) und in einer oberen Position mit mehreren Schraubenverbindungen (45) befestigt zu werden, wobei die untere Position und die obere Position derart in einer Höhenrichtung des Gehäuses (2) voneinander beabstandet sind, dass in der unteren Position des Erweiterungselements (8) der Erweiterungsdachabschnitt (63) eine im Wesentlichen gleichförmige Dachfläche mit dem festen Dachabschnitt (62, 64) bildet.

2. Stromumwandlungsanordnung nach Anspruch 1, **dadurch gekennzeichnet, dass** die im Wesentlichen gleichförmige Dachfläche eine im Wesentlichen ebene Dachfläche ist.

3. Stromumwandlungsanordnung nach Anspruch 2, **dadurch gekennzeichnet, dass** der Erweiterungsdachabschnitt (63) von einer Richtung parallel zur Höhenrichtung des Gehäuses (2) betrachtet eine Form eines Rechtecks aufweist.

4. Stromumwandlungsanordnung nach einem der vorhergehenden Ansprüche, **dadurch gekennzeichnet, dass** das Erweiterungselement (8) eine Stützstruktur (82) umfasst, die mehrere erste Schraubenöffnungen an einem oberen Abschnitt der Stützstruktur (82) und mehrere zweite Schraubenöffnungen an einem unteren Abschnitt der Stützstruktur (82) aufweist, wobei die mehreren ersten Schraubenöffnungen angepasst sind, um Schrauben von den mehreren Schraubenverbindungen (44) in der unteren Position des Erweiterungselements (8) aufzunehmen, und die mehreren zweiten Schraubenöffnungen angepasst sind, um Schrauben von den mehreren Schraubenverbindungen (45) in der oberen Position des Erweiterungselements (8) aufzunehmen.

5. Stromumwandlungsanordnung nach einem der vorhergehenden Ansprüche, **dadurch gekennzeichnet, dass** das Gehäuse (2) ein Lüftungsschlitzsystem zum Kühlen des Inneren des Gehäuses (2) umfasst, wobei das Lüftungsschlitzsystem mindestens einen Erweiterungselement-Lüftungsschlitz (91, 92) umfasst, der in dem Erweiterungselement (8) bereitgestellt ist und angepasst ist, um in der oberen Position des Erweiterungselements (8) eine Erweiterungselement-Kühlluftströmung zwischen Umgebungsluft und dem Inneren des Gehäuses (2) zuzulassen, während es verhindert, dass schädliche Fremdkörper den mindestens einen Erweiterungselement-Lüftungsschlitz (91, 92) durchqueren.

6. Stromumwandlungsanordnung nach einem der vorhergehenden Ansprüche, **dadurch gekennzeichnet, dass** das Erweiterungselement (8) ein Hebezeughalterungssystem zum Anheben des Erweiterungselements (8) von der unteren Position in die obere Position mit einem Kran umfasst.

7. Stromumwandlungsanordnung nach Anspruch 6, **dadurch gekennzeichnet, dass** das Hebezeughalterungssystem mindestens eine bewegliche Hebezeughalterung (84) umfasst, die zwischen einer Verwendungsposition und einer Ruheposition beweglich ist, wobei die Verwendungsposition zur Verbindung zwischen einem Hebeelement (105) eines Krans und der beweglichen Hebezeughalterung (84) angepasst ist und die Ruheposition eine Position ist, in der die bewegliche Hebezeughalterung (84) weniger von dem Erweiterungselement (8) nach oben hervorsteht als in der Verwendungsposition.

8. Stromumwandlungsanordnung nach einem der Ansprüche 5 bis 7, **dadurch gekennzeichnet, dass** das Gehäuse (2) mindestens eine Seitenwandöffnung umfasst, wobei die mindestens eine Seitenwandöffnung an einer Seitenwand des Gehäuses (2) bereitgestellt ist und sich neben dem Transformator (5) befindet, um die Kühlung des Transformators (5) zu verbessern.

9. Stromumwandlungsanordnung nach einem der vorhergehenden Ansprüche, **dadurch gekennzeichnet, dass** an einer Hochspannungsseite des Transformators (5) die Nennspannung höher oder gleich 5000 V ist, wobei die Hochspannungsseite des Transformators (5) den mindestens einen Hochspannungsanschluss (522) umfasst.

10. Stromumwandlungsanordnung nach einem der vorhergehenden Ansprüche, **dadurch gekennzeichnet, dass**, wenn das Erweiterungselement (8) sich in der unteren Position befindet, das Gehäuse (2) Abmessungen eines Seecontainers mit Standardgröße aufweist.

11. Verfahren zur Installation einer Stromumwandlungsanordnung nach einem der Ansprüche 1 bis 10, wobei das Verfahren umfasst:
Transportieren der Stromumwandlungsanordnung in die Nähe eines endgültigen Standorts davon;
Anheben der Stromumwandlungsanordnung zum endgültigen Standort mit einem Kran;
Anheben des Erweiterungselements (8) von der unteren Position in die obere Position mit dem Kran; und
Befestigen des Erweiterungselements (8) an dem Rahmen (4) in der oberen Position mit mehreren Schraubenverbindungen (45), während der Kran das Erweiterungselement (8) in der oberen Position hält.

## Revendications

1. Ensemble de conversion de puissance qui comprend :
un logement (2) qui comprend un châssis (4) et un toit (6), dans lequel le toit (6) comprend une partie de toit fixe (62, 64) qui est fixée fermement au châssis (4) ;
un système de conversion de puissance logé dans le logement (2), dans lequel le système de conversion de puissance comprend un transformateur (5) conçu pour augmenter la tension alternative, le transformateur (5) comporte un système de bornes (52) pour connecter le transformateur (5) à d'autres composants de l'ensemble de conversion de puissance, dans lequel le système de bornes (52) comprend au moins une borne haute tension (522) située dans une partie supérieure du transformateur (5), dans lequel la partie supérieure du transformateur (5) est située plus près du toit (6) du logement (2) qu'une partie inférieure du transformateur (5),
dans lequel le logement (2) comprend un élément d'extension (8), et le toit (6) comprend une partie de toit d'extension (63) attachée à l'élément d'extension (8), **caractérisé en ce que** l'élément d'extension (8) est conçu pour être fixé au châssis (4) à une position inférieure par une pluralité de raccords par boulons (44), et à une position supérieure par une pluralité de raccords par boulons (45), la position inférieure et la position supérieure étant espacées dans une direction de hauteur du logement (2) de sorte que, à la position inférieure de l'élément d'extension (8), la partie de toit d'extension (63) forme une surface de toit sensiblement uniforme avec la partie de toit fixe (62, 64).

2. Ensemble de conversion de puissance selon la revendication 1, **caractérisé en ce que** la surface de toit sensiblement uniforme est une surface de toit sensiblement plane.

3. Ensemble de conversion de puissance selon la revendication 2, **caractérisé en ce que** la partie de toit d'extension (63) a la forme d'un rectangle lorsqu'elle est vue dans une direction parallèle à la direction de hauteur du logement (2).

4. Ensemble de conversion de puissance selon l'une quelconque des revendications précédentes, **caractérisé en ce que** l'élément d'extension (8) comprend une structure de support (82) qui comporte une pluralité de premières ouvertures de boulons au niveau d'une partie supérieure de la structure de support (82), et une pluralité de deuxièmes ouvertures de boulons au niveau d'une partie inférieure de la structure de support (82), la pluralité de premières ouvertures de boulons sont conçues pour recevoir les boulons de la pluralité de raccords par boulons (44) à la position inférieure de l'élément d'extension (8), et la pluralité de deuxièmes ouvertures de boulons sont conçues pour recevoir les boulons de la pluralité de raccords par boulons (45) à la position supérieure de l'élément d'extension (8).

5. Ensemble de conversion de puissance selon l'une quelconque des revendications précédentes, **caractérisé en ce que** le logement (2) comprend un système de grille de ventilation pour refroidir l'intérieur du logement (2), le système de grille de ventilation comprenant au moins une grille de ventilation d'élément d'extension (91, 92) prévue dans l'élément d'extension (8) et conçue pour permettre, à la position supérieure de l'élément d'extension (8), une circulation d'air de refroidissement d'élément d'extension entre l'air ambiant et l'intérieur du logement (2) tout en empêchant le passage d'objets étrangers dangereux à travers ladite au moins une grille de ventilation d'élément d'extension (91, 92).

6. Ensemble de conversion de puissance selon l'une quelconque des revendications précédentes, **caractérisé en ce que** l'élément d'extension (8) comprend un système de support d'engin de levage pour soulever l'élément d'extension (8) de la position inférieure à la position supérieure avec une grue.

7. Ensemble de conversion de puissance selon la revendication 6, **caractérisé en ce que** le système de support d'engin de levage comprend au moins un support d'engin de levage mobile (84) qui peut être déplacé entre une position d'utilisation et une position de repos, la position d'utilisation étant conçue pour une liaison entre un élément de levage (105) d'une grue et le support d'engin de levage mobile (84), et la position de repos étant une position dans laquelle le support d'engin de levage mobile (84) se projette moins vers le haut de l'élément d'extension (8) que dans la position d'utilisation.

8. Ensemble de conversion de puissance selon l'une quelconque des revendications 5 à 7, **caractérisé en ce que** le logement (2) comprend au moins une ouverture de paroi latérale, ladite au moins une ouverture de paroi latérale est prévue sur une paroi latérale du logement (2), et située à proximité du transformateur (5) afin d'améliorer le refroidissement du transformateur (5).

9. Ensemble de conversion de puissance selon l'une quelconque des revendications précédentes, **caractérisé en ce que**, d'un côté haute tension du transformateur (5), la tension nominale est supérieure ou égale à 5000 V, le côté haute tension du transformateur (5) comprenant ladite au moins une borne haute tension (522).

10. Ensemble de conversion de puissance selon l'une quelconque des revendications précédentes, **caractérisé en ce que**, lorsque l'élément d'extension (8) est à la position inférieure, le logement (2) a les dimensions d'un conteneur maritime de dimensions standard.

11. Procédé pour installer un ensemble de conversion de puissance selon l'une quelconque des revendications 1 à 10, dans lequel le procédé comprend :
le transport de l'ensemble de conversion de puissance à proximité d'un emplacement final de celui-ci ;
le levage de l'ensemble de conversion de puissance à l'emplacement final avec une grue ;
le levage de l'élément d'extension (8) de la position inférieure à la position supérieure avec la grue ; et
la fixation de l'élément d'extension (8) au châssis (4) à la position supérieure par une pluralité de raccords par boulons (45) alors que la grue maintient l'élément d'extension (8) à la position supérieure.
